# EUROPEAN PATENT APPLICATION

(11) **EP 4 749 776 A1**
(43) Date of publication of application: **27.05.2026**
(21) Application number: 25202710.7
(22) Date of filing: 17.09.2025
(51) Int. Cl.: H01M 50/105, H01M 50/136, H01M 50/178, H01M 50/519, H01M 50/55, H01M 50/557

(54) **SECONDARY BATTERY, DEVICE FOR MANUFACTURING SECONDARY BATTERY, AND METHOD OF MANUFACTURING SECONDARY BATTERY**

(30) Priority: 22.11.2024 KR 20240168583
(71) Applicant: SAMSUNG SDI CO., LTD., Yongin-si, Gyeonggi-do 17084 (KR)
(72) Inventor: AN, Kangsik, 17084 Yongin-Si (KR)
(74) Representative: Maiwald GmbH

(57) **Abstract**

The present disclosure relates to a secondary battery, a device for manufacturing a secondary battery, and a method of manufacturing a secondary battery. The secondary battery includes an electrode assembly and a case including a body portion accommodating the electrode assembly, a cover covering an opening of the body portion, and a sealing portion if formed where outer surfaces of the body portion and the cover contact each other to thereby seal the electrode assembly in the case. The sealing portion includes a top sealing portion extending in a first direction from an upper surface of the case; side sealing portions each of which extend from a side surface of the case in (i) a second direction that intersects the first direction or (ii) a direction opposite to the second direction. A corner sealing portion folded in the first direction when the top sealing portion and the side sealing portions are folded in a third direction intersecting the first direction and the second direction.

## Description

### BACKGROUND

### TECHNICAL FIELD

The present disclosure relates to a secondary battery, a device for manufacturing a secondary battery, and a method of manufacturing a secondary battery.

### DESCRIPTION OF THE RELATED ART

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, laptop computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

A flexible printed circuit board (FPCB) may be electrically connected to an electrode of an electrode assembly of a secondary battery. It is advantageous in terms of energy density to allow a path along which an FPCB extends to be formed adj acent to a case that accommodates the electrode assembly. However, in a pouch-shaped secondary battery, a case and a cover are sealed by welding, and a sealing portion on which the welding has been performed extends out of the case. Therefore, the FPCB cannot extend in a straight line adj acent to the case. Thus, the path along which the FPCB extends becomes longer to bypass the sealing portion. To solve such a problem, it may be necessary to increase an energy density by reducing the overall length of a battery pack.

The above information disclosed in this Background section is for enhancement of understanding of the background of the present disclosure, and therefore, it may contain information that does not constitute related (or prior) art.

### SUMMARY

The present disclosure provides a secondary battery where an FPCB connected to a lead tab can extend in a straight line along the periphery of a case.

The present disclosure also provides a device for manufacturing a secondary battery capable of carrying out a process of folding a sealing portion (terrace) that is formed during the manufacturing process of a secondary battery.

The present disclosure further provides a method of manufacturing a secondary battery including a process of folding a sealing portion to secure a path along which an FPCB extends.

These and other aspects and features of the present disclosure will be described in or will be apparent from the following description of embodiments of the present disclosure.

A secondary battery according to an embodiment of the present disclosure includes an electrode assembly and a case including a body portion accommodating the electrode assembly, a cover covering an opening in the body portion, and a sealing portion formed where outer surfaces of the body portion and the cover contact each other to thereby seal the electrode assembly in the case. The sealing portion includes a top sealing portion extending in a first direction from an upper surface of the case; side sealing portions each of which extend from a side surface of the case in (i) a second direction that intersects the first direction or (ii) a direction opposite to the second direction; and a corner sealing portion folded in the first direction when the top sealing portion and the side sealing portions are folded in a third direction intersecting the first direction and the second direction.

According to one embodiment of the present disclosure, the corner sealing portion may be folded in the direction opposite to the second direction.

According to one embodiment of the present disclosure, the corner sealing portion be placed on the top sealing portion.

According to one embodiment of the present disclosure, the top sealing portion and the plurality of side sealing portions may be folded along folding areas in the third direction, and the folding areas may include a first folding area along which the side sealing portions are folded in the third direction, a second folding area extending from the first folding area, and a third folding area along that the top sealing portion is folded in the third direction.

According to one embodiment of the present disclosure, the corner sealing portion may include corner sealing portions, and the folding areas may include a fourth folding area along which the corner sealing portions are folded in the second direction or the direction opposite to the second direction after having been folded in the third direction along the second folding area; and a fifth folding area along which folding is made within the corner sealing portion when each of corner sealing portions is folded along the fourth folding area.

According to one embodiment of the present disclosure, the fourth folding area may be positioned above the third folding area in the first direction.

According to one embodiment of the present disclosure, the fifth folding area may extend from the top of the sealing portion to the second folding area.

According to one embodiment of the present disclosure, each of the plurality of corner sealing portions may be folded in the first direction by being folded along the fourth folding area and the fifth folding area.

According to one embodiment of the present disclosure, a first lead tab connected to a plurality of first electrode tabs of the electrode assembly and a second lead tab connected to a plurality of second electrode tabs of the electrode assembly may extend in the first direction, and, when the top sealing portion is folded in the third direction, each of the first lead tab and the second lead tab may also be folded in the third direction and then folded in a direction opposite to the third direction.

According to one embodiment of the present disclosure, the first lead tab and the second lead tab may be electrically connected to a FPCB, and the FPCB may extend in the second direction.

A device for manufacturing a secondary battery according to one embodiment of the present disclosure includes a guide block that fixes a case including a body portion accommodating an electrode assembly, a cover covering an opening of the body portion to seal the electrode assembly, and a sealing portion where outer surfaces of the body portion and the cover contact each other to seal the electrode assembly in the case; a push block that applies pressure to the case on a side that is opposite to the guide block; and a roller that rotates on a top sealing portion located on an upper surface of the case and folds the top sealing portion.

According to one embodiment of the present disclosure, the guide block may include a first guide block supporting at least a portion of a lower surface of the case in a first direction and a second guide block supporting at least a portion of a side surface of the case in a direction opposite to a second direction, and the push block may include a first push block pressing an upper portion of the case in a direction opposite to the first direction on a side that is opposite to the first guide block to bend the top sealing portion and a second push block pressing a side portion of the case in the second direction on a side that is opposite to the second guide block to fold each of side sealing portions on their respective side surfaces of the case.

According to one embodiment of the present disclosure, a width of the first push block in the second direction may be less than a width of the top sealing portion in the second direction.

According to one embodiment of the present disclosure, the roller may include a first roller and a second roller that rotate from opposite ends of the top sealing portion to a central area of the top sealing portion thereof so as to fold the top sealing portion.

According to one embodiment of the present disclosure, a method of manufacturing a secondary battery, including an electrode assembly and a case including a body portion accommodating the electrode assembly, a cover covering an opening of the body portion, and a sealing portion formed where outer surfaces of the body portion and the cover contact each other to thereby seal the electrode assembly in the case, includes folding, toward the case, each of side sealing portions of the sealing portion, each of the side sealing portions extending from a side surface, the folding being in a third direction that intersects the second direction; applying pressure to a top sealing portion of the sealing portion in a direction opposite to the first direction, the top sealing extending from an upper surface of the case in a first direction intersecting the second direction and the third direction; and folding the top sealing portion in the third direction by a rotational movement a plurality of rollers to fold corner sealing portions of the sealing portion in the second direction and a direction opposite to the second direction.

According to one embodiment of the present disclosure, the secondary battery may include a first lead tab connected to a plurality of first electrode tabs of the electrode assembly and extending in the first direction and a second lead tab connected to a plurality of second electrode tabs of the electrode assembly and extending in the first direction, and the folding of corner sealing portions of the sealing portion in the second direction and the direction opposite to the second direction may include folding each of the first lead tab and the second lead tab in the third direction when the top sealing portion is folded in the third direction. The method of manufacturing a secondary battery may further include folding the first lead tab and the second lead tab, which have been folded, in a direction opposite to the third direction; and electrically connecting the first lead tab and the second lead tab, after the folds, to an FPCB extending in the second direction.

According to one embodiment of the present disclosure, the FPCB may extend along the upper surface of the case from the first lead tab and the second lead tab.

According to one embodiment of the present disclosure, the roller may move while pressing an upper end of the top sealing portion by about 1.3 mm to 1.7 mm or a distance corresponding to around 70 percent to 80 percent of a height of the upper end of the top sealing portion.

According to one embodiment of the present disclosure, the corner sealing portions may be folded so as to be adjacent to the upper surface of the case.

According to one embodiment of the present disclosure, the top sealing portion and the side sealing portions may be respectively folded along folding areas in the third direction, and the folding areas may include a first folding area along which the side sealing portions are folded in the third direction, a second folding area extending from the first folding area, and a third folding area along which the top sealing portion is folded in the third direction. The folding areas may include a fourth folding area along which each of corner sealing portions is folded in the direction opposite to the second direction after having been folded in the third direction along the second folding area and a fifth folding area along which folding is made within the corner sealing portion when each of the sealing portions are folded along the fourth folding area.

According to some embodiments of the present disclosure, a sealing portion at a corner of a case may be folded so that it does not block a path along which an FPCB extends, thereby shortening the overall length of a battery pack.

According to some embodiments of the present disclosure, the volume of a battery pack may be reduced, resulting in an increase in an energy density.

However, aspects and features of the present disclosure are not limited to those described above, and other aspects and features not mentioned will be clearly understood by a person skilled in the art from the detailed description, described below.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings.
FIG. 1 shows how an electrode assembly of a secondary battery is built into a case according to one embodiment of the present disclosure.
FIG. 2 is a perspective view of a secondary battery according to one embodiment of the present disclosure.
FIG. 3 is an exploded perspective view of a case, an FPCB, and a PCM of a secondary battery according to one embodiment of the present disclosure.
FIG. 4 shows a secondary battery a sealing portion of which has been deployed according to one embodiment of the present disclosure.
FIG. 5 shows folding areas on a cover including a sealing portion according to one embodiment of the present disclosure.
FIG. 6 is a schematic view of a device for manufacturing a secondary battery according to one embodiment of the present disclosure.
FIG. 7 shows how a bending portion is formed on a top sealing portion by a first push block according to one embodiment of the present disclosure.
FIG. 8 shows a process of manufacturing a secondary battery according to one embodiment of the present disclosure.
FIG. 9 shows side sealing portions, which have been folded, according to one embodiment of the present disclosure.
FIG. 10 shows how a top sealing portion is pressed by a first push block according to one embodiment of the present disclosure.
FIG. 11 shows a folded portion, which has been folded by a first roller and a second roller, according to one embodiment of the present disclosure.
FIG. 12 shows a FPCB connected to a lead tab according to one embodiment of the present disclosure.
FIG. 13 shows how a folded portion is formed as a top sealing portion and a side sealing portion are folded in a first direction according to one embodiment of the present disclosure.
FIG. 14 shows a folded portion including a first folded portion, a second folded portion, and a third folded portion according to one embodiment of the present disclosure.
FIG. 15 shows how a conventional FPCB is extended.
FIG. 16 shows how a FPCB is extended according to one embodiment of the present disclosure.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way. Therefore, the embodiments described in this specification and the configurations shown in the drawings are only some of the embodiments of the present disclosure and do not represent all of the technical spirit, aspects, and features of the present disclosure. Accordingly, it should be understood that there may be various equivalents and modifications that can replace or modify the embodiments described herein at the time of filing this application.

Also, it will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, in the figures, dimensions of the various elements, layers, etc. may be exaggerated for clarity of illustration. The same reference numerals designate the same elements.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

It will be understood that, although the terms first, second, etc. may be used herein to describe various elements, these elements should not be limited by these terms. These terms are only used to distinguish one element from another element. Thus, a first element could be termed a second element unless the context clearly indicates otherwise.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components." It will also be understood that when an element is referred to as being "electrically coupled" to another element, it may be directly coupled to the other element or intervening elements may be present.

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terminology used herein is for the purpose of describing embodiments of the present disclosure and is not intended to be limiting of the present disclosure.

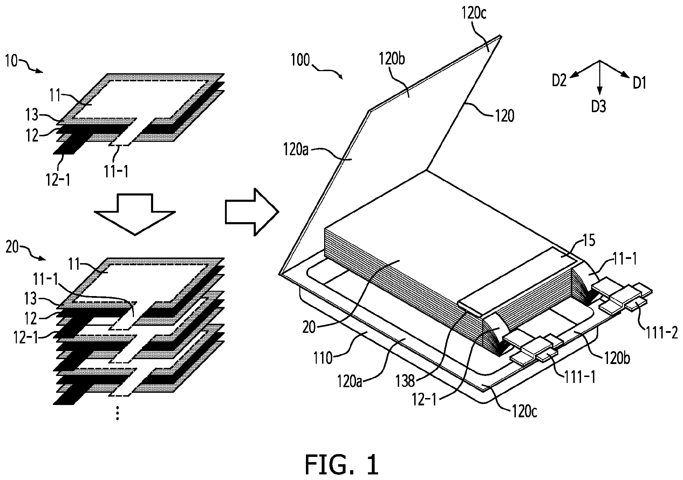

FIG. 1 shows how an electrode assembly 20 of a secondary battery 100 is provided in a case according to an embodiment of the present disclosure. Referring to FIG. 1, the electrode assembly 20 may be positioned in an internal space formed by combining a body portion 110 and a cover 120. A sealing portion may be provided in an area where the cover 120 and the body portion 110 are in contact with each other. The sealing portion may include a top sealing portion, a side sealing portion, and a corner sealing portion formed, all of which are formed at the periphery of the case. Here, a direction in which a top sealing portion 120b extends from the case may be defined as a first direction D1, a direction in which the side sealing portion 120a extends from the case may be defined as a second direction D2, and a direction in which the top sealing portion 120b and the side sealing portion 120a are folded may be defined as a third direction D3.

Generally speaking, a pouch-shaped secondary battery 100 may include the electrode assembly 20 and a case that accommodates the electrode assembly 20. The case may be in the shape of a pouch. The electrode assembly 20 may include a positive electrode plate such as a first electrode plate 11 and a negative electrode plate such as a second electrode plate 12 . A separator may be interposed between the plates 11 and 12. In one example, the first electrode plate 11 may be a negative electrode plate, and the second electrode plate 12 may be a positive electrode plate. In other examples, the first electrode plate 11 may be a positive electrode plate and the second electrode plate 12 may be a negative electrode plate.

The first electrode plate 11 may include a first electrode tab 11-1 that is electrically connected to a first electrode uncoated portion. The second electrode plate 12 may include a second electrode tab 12-1 that is electrically connected to a second electrode uncoated portion. The first electrode tab 11-1 and the second electrode tab 12-1 may be electrically connected by being welded to a first lead tab 111-1 and a second lead tab 111-2, respectively. A tab film for insulation from the case may be attached to the first lead tab 111-1 and the second lead tab 111-2.

After the electrode assembly 20 is accommodated in the case, the sealing portions at the edges of the case may be moved into contact with each other to seal the case. Here, the case may be sealed with a tab film placed between the sealing portions. The tab film may be attached to each of the first electrode tab 11-1 and the second electrode tab 12-1.

The sealing portions of the case may be made of a heat-melting material, and heat-melting layers may be bonded to each other to seal the case. Because heat-melting materials generally do not adhere well to metals, a thin film-shaped tab film may be attached to the electrode tab and fused to the case.

Referring to FIG. 1, the electrode assembly 20 may be formed by stacking unit cells 10 that each include the first electrode plate 11 having the first electrode tab 11-1, the second electrode plate 12 having the second electrode tab 12-1, and a separator interposed between the first electrode plate 11 and the second electrode plate 12. As such, the electrode assembly 20 may be an assembly formed by a stacking process. The electrode plates and the electrode tabs may be formed in the shape of a thin plate or a film. The electrode assembly 20 may be a Z-stack electrode assembly formed by positioning the first electrode plate 11 and the second electrode plate 12 to their sides of a separator that is folded in a Z shape. But the shape of the electrode assembly is not limited in the present disclosure.

A plurality of electrode assemblies 20 may be stacked with their long sides adjacent to each other and accommodated separately inside the case. The number of the electrode assemblies is not limited in the present disclosure.

The first electrode tab 11-1 and the second electrode tab 12-1 may be positioned on the same side of the electrode assembly 20. For example, the first electrode tab 11-1 and the second electrode tab 12-1 may be formed on a same side of the electrode assembly 20 that is parallel to a direction in which the unit cells 10 of the electrode assembly 20 are stacked. In other embodiments, the first electrode tab 11-1 and the second electrode tab 12-1 may extend from different sides of the electrode assembly 20. For example, the first electrode tab 11-1 may be placed on the left side of the electrode assembly 20 among the sides parallel to the direction in which the unit cells 10 of the electrode assembly 20 are stacked and the second electrode tab 12-1 may be disposed on the right side of the electrode assembly 20. The left and right sides are referred to as such for convenience based on the secondary battery 100 illustrated in FIG. 1, and the positions of the components may change when the secondary battery 100 is rotated left and right or up and down.

The electrode assembly 20 may be accommodated in the case together with an electrolyte. In some embodiments, the first lead tab 111-1 and the second lead tab 111-2 may be connected to the first electrode tab 11-1 of the first electrode plate 11 and the second electrode tab 12-1 of the second electrode plate 12 of the electrode assembly 20, respectively. A first collector portion and a second collector portion may be welded and connected to the first lead tab 111-1 and the second lead tab 111-2, respectively.

A tape 15 may be attached to the front surface of the electrode assembly 20 perpendicular to the direction in which the unit cells 10 of the electrode assembly 20 are stacked. For example, the tape 15 may be attached to the edge of the electrode assembly 20 adjacent to the portion where the first electrode tab 11-1 or the second electrode tab 12-1 is positioned on the front surface of the electrode assembly 20 perpendicular to the direction in which the unit cells 10 of the electrode assembly 20 are stacked. In other embodiments, the tape 15 may be attached to the edge of the electrode assembly 20 adjacent to the portion where the first electrode tab 11-1 or the second electrode tab 12-1 is positioned on the back surface of the electrode assembly 20 perpendicular to the direction in which the unit cells 10 of the electrode assembly 20 are stacked. The front or back surface of the electrode assembly 20 is referred to as such to distinguish two surfaces of the electrode assembly 20 that are perpendicular to the direction in which the unit cells 10 of the electrode assembly 20 are stacked. Here, "front or back" does not necessarily mean a surface facing the front or back. The front or back surface of the electrode assembly 20 may be referred to as a first or second surface of the electrode assembly 20 that is perpendicular to the direction in which the unit cells 10 are stacked.

An assembly formed by a stacking process as described above with reference to FIG. 1. But the present disclosure is not limited to such an embodiment. In another example, the electrode assembly 20 may be manufactured in the shape of a jelly roll.

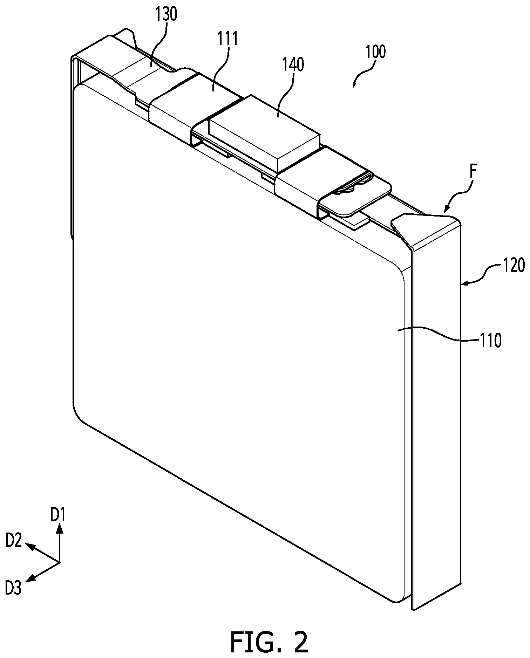

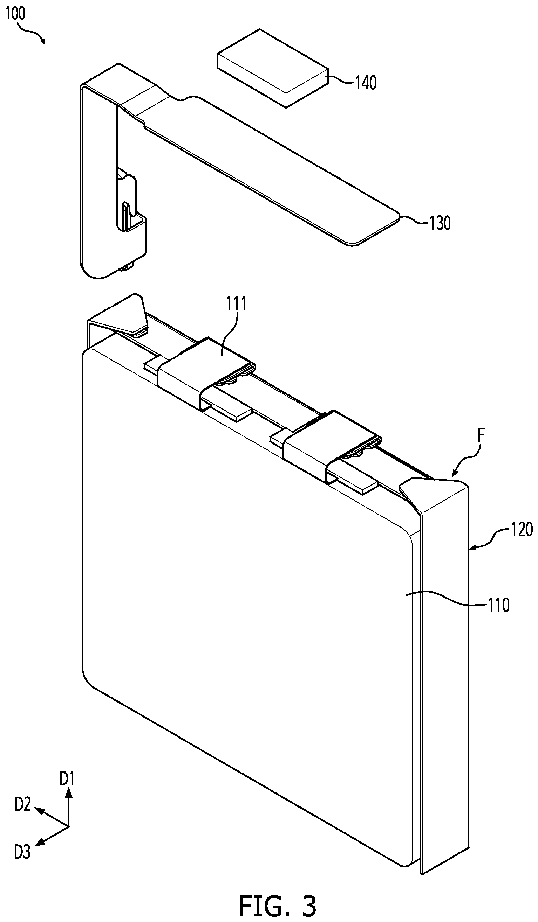

FIG. 2 is a perspective view of the secondary battery 100 according to one embodiment of the present disclosure. FIG. 3 is an exploded perspective view of a case, an FPCB 130, and a power train control module (PCM) 140 of the secondary battery 100 according to an embodiment of the present disclosure. Referring to FIGS. 2 and 3, a lead tab 111 including a first lead tab and a second lead tab, which have been folded two times, may be electrically connected to the FPCB 130, and the FPCB 130 may extend in a second direction D2. As illustrated, the FPCB 130 may be in contact with the case. Although the extension path is changed as the FPCB 130 is provided along the case in this example, the FPCB 130 extends in a straight line in the second direction D2.

A pair of lead tabs 111 protruding from the electrode assembly 20 and the case may contact the FPCB 130 to be electrically connected thereto on the upper surface of the case, and the FPCB 130 may be connected to the PCM 140 on the upper surface of the case. Here, the lead tab 111 may be electrically connected to the FPCB 130 on the upper surface of the case as it is folded toward the upper surface of the case. When the pair of lead tabs 111 are spaced apart from each other as in this example, the PCM 140 may be positioned between the lead tabs 111 and connected to the FPCB 130.

The FPCB 130 may have at least a section that is in contact with the case. The sealing portion may be folded at the corner sealing portion 120c to thereby form a folded portion F that folds toward the upper surface of the case. With such a configuration, the FPCB 130 may extend in contact with the case while extending past the sealing portion.

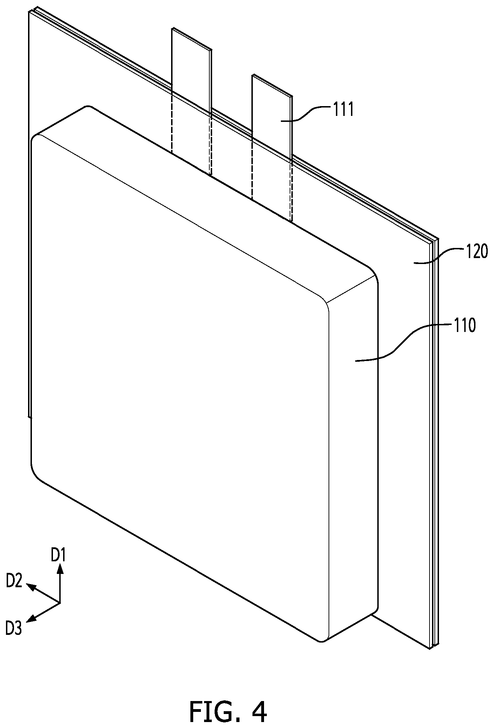

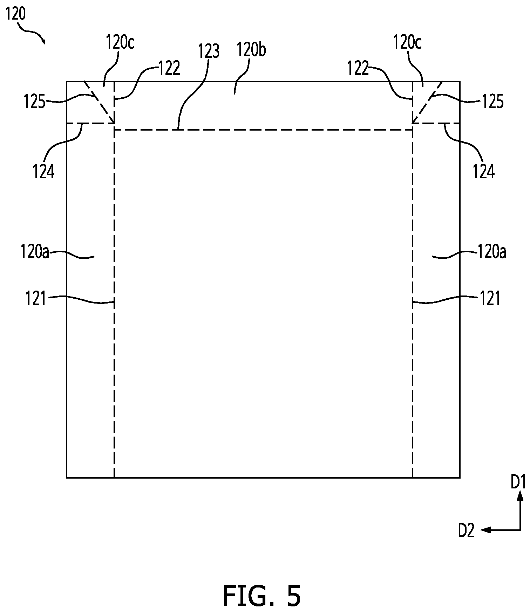

FIG. 4 shows the secondary battery 100 with a sealing portion according to an embodiment of the present disclosure. Referring to FIG. 4, the sealing portion formed by the combination of the body portion 110 and the cover 120 may be formed at the periphery of the body portion 110 before it is folded. A portion of the section where the lead tab 111 extends out of the case may be positioned with the top sealing portion 120b. Here, the sealing portion may be folded along the folding areas shown in FIG. 5.

FIG. 5 is a view of folding areas on the sealing portion and the cover 120 according to an embodiment of the present disclosure. Referring to FIG. 5, the sealing portion formed at the periphery of the cover 120 may be folded in a third direction D3 to thereby contact or be adjacent to the body portion 110. Specifically, the top sealing portion 120b may be folded in the third direction D3 along a third folding area 123, and the side sealing portion 120a may be folded in the third direction D3 along a first folding area 121. Here, as the top sealing portion 120b and the side sealing portion 120a are folded, a pair of corner sealing portions 120c may form overlapping surfaces and be folded in a second direction D2 and a direction opposite to the second direction D2 along a fourth folding area 124 and a fifth folding area 125 adjacent to the upper surface of the case. In some embodiments, the fifth folding area 125 and a second folding area 122 may overlap each other when the corner sealing portion 120c is folded toward the upper surface of the case. By this overlapping, two layers of the folded portion F may become a part of the corner sealing portion 120c. Here, the overlapping area formed when the corner sealing portion 120c is folded may be positioned on the top sealing portion 120b, which has also been folded.

More specifically, the folded portion may include the first folding area 121 along which the side sealing portion 120a is folded in the third direction D3, the fourth folding area 124 along which the corner sealing portion 120c is folded to be adjacent to the upper surface of the case, the fifth folding area 125 and the second folding area 122 along which the corner sealing portion 120c is folded within the area, and the third folding area 123 along which the top sealing portion 120b is folded in the third direction D3. Here, the second folding area 122 may be formed on the same line as the first folding area 121 in the first direction D1. In some embodiments, the fifth folding area 125 may extend across the corner sealing portion 120c, and one end thereof may be in contact with the ends of the second folding area 122 and the fourth folding area 124. Also, the fourth folding area 124 may be positioned higher than the third folding area 123 in the first direction D1.

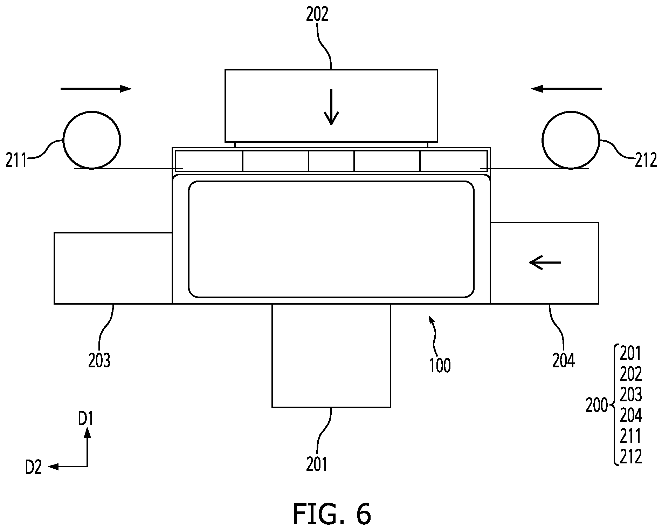

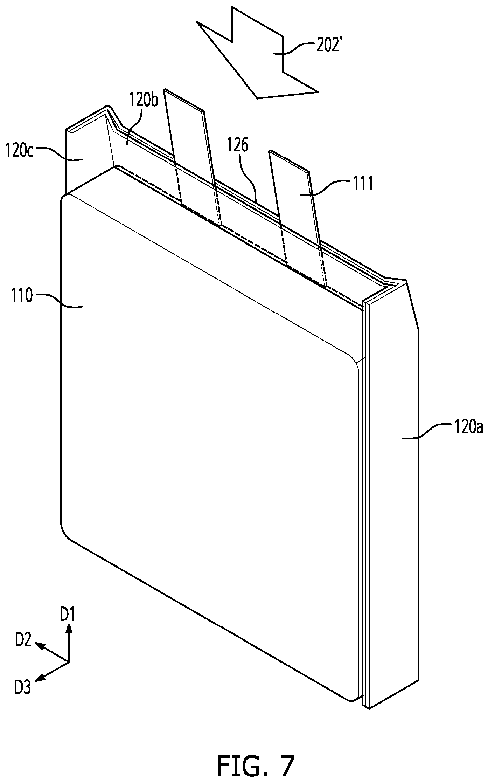

FIG. 6 is a schematic view of a device 200 for manufacturing the secondary battery 100 according to an embodiment of the present disclosure. FIG. 7 shows how a bending portion 126 is formed on the top sealing portion 120b by a first push block 202 according to an embodiment of the present disclosure. Referring to FIGS. 6 and 7, the device 200 for manufacturing the secondary battery 100 may include a guide block that fixes the case of the secondary battery 100 described above, a push block that presses the case from the opposite side of the guide block, and a roller that rotates on the top sealing portion 120b positioned on the upper surface of the case and folds the top sealing portion 120b.

The guide block may include a first guide block 201 that supports at least a part of the bottom surface of the case in a first direction D1 and a second guide block 203 that supports at least a part of the side surface of the case in a direction opposite to a second direction D2. The push block may include the first push block 202 that that presses the upper part of the case in a direction opposite to the first direction D1 on the opposite side from the first guide block 201 to bend the top sealing portion 120b and a second push block 204 that presses the side surface of the case in a direction opposite to a second direction D2 on the opposite side from the second guide block 203 to fold the side sealing portion 120a on the side surface of the case.

The width of the first push block 202 in the second direction D2 may be narrower than the width of the top sealing portion 120b in the second direction D2. This is because the side sealing portion 120a that is folded in a third direction D3 along the first folding area 121 may be damaged instead of being folded by a pressing force transmitted in a pressing direction 202' in the third direction D3. In some embodiments, the pressing direction 202' may be set to allow the top sealing portion 120b not only to be bent in the direction opposite to the first direction D1 but also to be partially folded in the third direction D3. That is, the top sealing portion 120b may be bent. In some embodiments, the portion where the pressing force is directly transmitted may be formed in the second direction D2 and the direction opposite to the second direction D2 from the center of the top sealing portion 120b. And the pressing force may be spaced apart from the side sealing portions 120a located on both sides by a predetermined distance.

The roller may include a first roller 211 and a second roller 212, which may each rotate from opposite ends of the top sealing portion 120b to the center thereof to fold the top sealing portion 120b. Specifically, because the corner sealing portion 120c is folded toward the upper surface of the case, the corner sealing portion 120c on the left side (as depicted) may be folded in the direction opposite to the second direction D2 by the first roller 211. The corner sealing portion 120c on the right side (as depicted) may be folded in the second direction D2 by the second roller 212. That is, the first roller 211 and the second roller 212 may rotate to reach the upper space of the case and press the sealing portion to fold it toward the case.

In a specific example, the roller may move while pressing the upper end of the top sealing portion 120b by around 1.3 mm to 1.7 mm or a distance corresponding to around 70 percent to 80 percent of the height of the upper end of the top sealing portion 120b. In this example, the height of the top sealing portion 120b may be 1.5 mm to 2.7 mm, and the gap between the body portion 110 and the electrode assembly 20 accommodated inside the body portion 110 may be at least 0.6 mm. This configuration is based on the thickness of the sealing portion. When the roller presses the top sealing portion 120b of the sealing portion by a distance corresponding to its height, the electrode assembly 20 inside the case may be damaged due to the deformation of the case. Therefore, the roller may press the upper end of the top sealing portion 120b by a distance shorter than the height of the top sealing portion 120b.

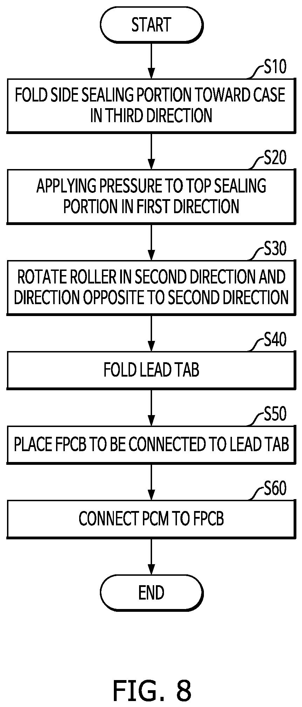

FIG. 8 is a flow chart of a process of manufacturing the secondary battery 100 according to an embodiment of the present disclosure. Referring to FIG. 8, a method of manufacturing the secondary battery 100 may include folding the side sealing portion 120a of the sealing portion, which extends from the side surface of the case in a second direction D2 and a direction opposite to the second direction D2, in a third direction D3 that is toward the case at S10. The method further includes applying pressure to the top sealing portion 120b of the sealing portion, which extends from the upper surface of the case in a first direction D1, in a direction opposite to the first direction D1 at S20. The direction in which the top sealing portion 120b is pressed may be a direction slightly slanted to the third direction D3 from the direction opposite to the first direction D1. Then, the roller may be rotated in the second direction and the direction opposite to the second direction at S30. As a result, the top sealing portion 120b and the lead tab 111 may be folded for the first time in the third direction D3 by the rotational movement of the roller. Then, at S40, the lead tab 111, which has been folded once in the third direction D3 while the top sealing portion 120b is folded, may be folded for the second time in a direction opposite to the third direction D3.

The folded inner surface of the lead tab 111, which has been folded two times, and the FPCB 130 may be electrically connected to each other at S50. That is, one side of the FPCB 130 may be in contact with the lead tab 111 and the other side may be in contact with the top sealing portion 120b or the upper surface of the case. Therefore, an insulator may be placed on the other side. The FPCB 130 electrically connected to the lead tab 111 may be connected to the PCM 140 at S60.

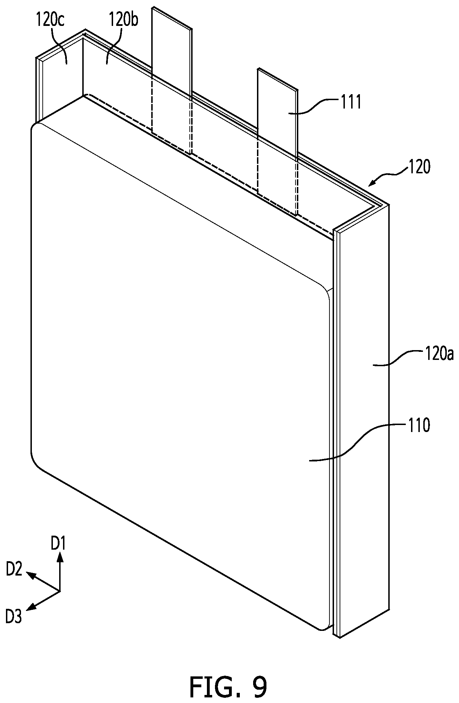

FIG. 9 shows the folded side sealing portions 120a according to an embodiment of the present disclosure. Referring to FIGS. 6 and 9, side sealing portions 120a arranged on their respective sides of the body portion 110 may be folded in a third direction D3 by the second guide block 203 and the second push block 204. Each of the side sealing portions 120a may be folded in the third direction D3, so that they contact or are positioned adjacent to the body portion 110. By this folding, the corner sealing portions 120c may face each other.

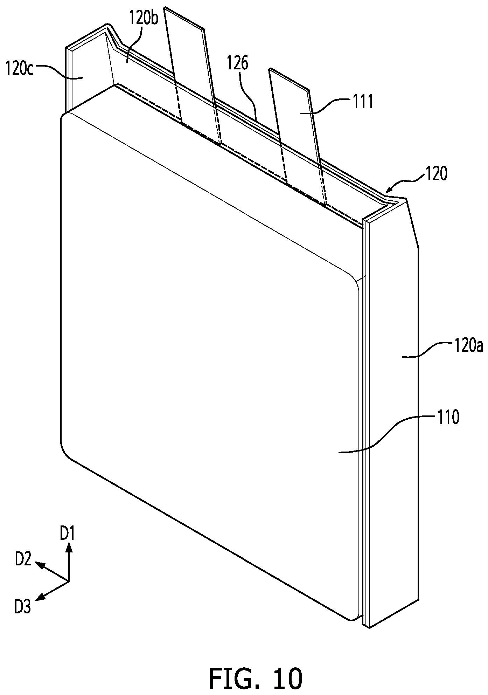

FIG. 10 shows how the top sealing portion 120b is pressed by the first push block 202 according to an embodiment of the present disclosure. Referring to FIGS. 6 and 10, the top sealing portion 120b may be pressed in the pressing direction 202' including at least a third direction D3 by the first push block 202. The center of the top sealing portion 120b may be bent and slightly slanted to the third direction D3 when the top sealing portion 120b is pressed by the first push block 202. As the top sealing portion 120b is bent, it may be folded in the third direction D3 when the roller enters.

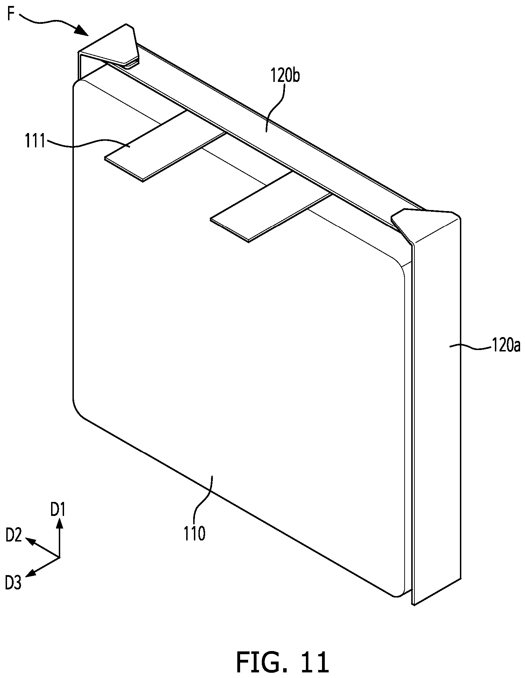

FIG. 11 shows the folded portion F, which has been folded by the first roller 211 and the second roller 212, according to an embodiment of the present disclosure. Referring to FIGS. 6 and 11, the corner sealing portion 120c and the top sealing portion 120b, which have been bent, may be pressed through the rotational movement of the first roller 211 and the second roller 212, so that not only may the top sealing portion 120b be folded in the third direction D3, but the corner sealing portions 120c may be folded in the second direction D2 and a direction opposite to the second direction D2. Referring to FIGS. 5 and 11, each of the corner sealing portions 120c may be folded along the second folding area 122, the fourth folding area 124, and the fifth folding area 125 so as to be folded over in the first direction D1. The corner sealing portions 120c, which have been folded in the second direction and the direction opposite to the second direction, may be folded along the fourth folding area 124, so that they may be positioned on the top sealing portion 120b, which has been folded in the third direction D3. That is, the corner sealing portions 120c may be folded along the fourth folding area 124, so that they overlap the top sealing portion 120b in the first direction D1.

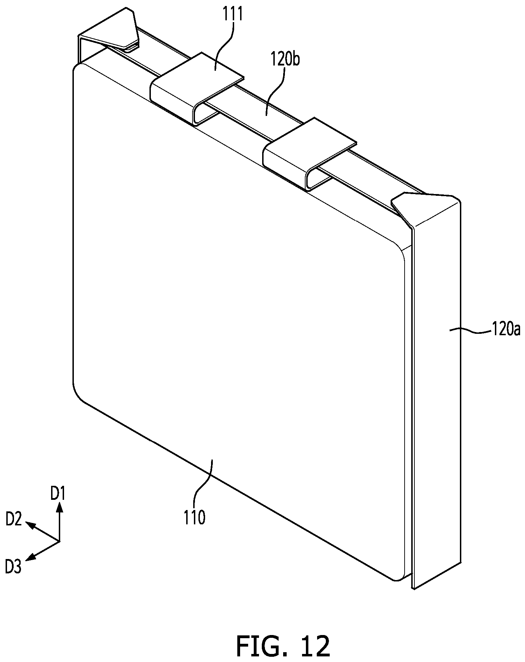

FIG. 12 shows the FPCB connected to the lead tab 111 according to an embodiment of the present disclosure. Referring to FIG. 12, when the top sealing portion 120b is folded in a third direction D3, each of the first lead tab and the second lead tab may also be folded in the third direction D3. While the FPCB is being connected and placed, the first lead tab and the second lead tab, which have been folded in the third direction D3, may be folded in a direction opposite to the third direction D3. During the second folding of the first lead tab and the second lead tab, the FPCB and the folded inner surface of the lead tab 111 may be electrically connected to each other.

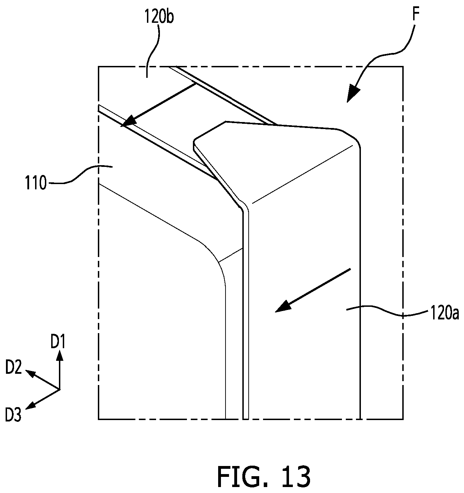

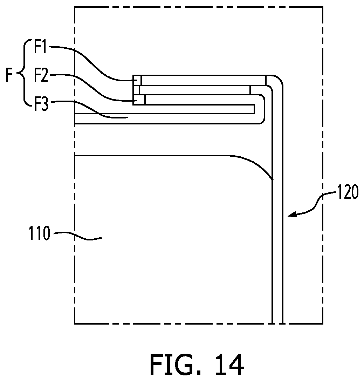

FIG. 13 shows how the folding portion F is formed as the top sealing portion 120b and the side sealing portion 120a are folded in a first direction according to an embodiment of the present disclosure. FIG. 14 shows the folding portion F including a first folding portion F1, a second folding portion F2, and a third folding portion F3 according to an embodiment of the present disclosure. Referring to FIGS. 13 and 14, the top sealing portion 120b and the side sealing portion 120a of the folding portion F may be folded in a third direction D3, and the corner sealing portion 120c thereof at the boundary therebetween may be folded along a plurality of folding areas. By the plurality of folding areas, the folding portion F may be formed with a plurality of layers that are stacked in the first direction D1. Referring to FIG. 14, the folding portion F may include the first folding portion F1 at the top, the second folding portion F2 at the middle, and the third folding portion F3 at the bottom.

The first folding portion F1 may be a part of the corner sealing portion 120c as one of two areas thereof divided by the fifth folding area 125 and an area adjacent to the side sealing portion 120a. The second folding portion F2 may be the other of the two areas of the corner sealing portion 120c divided by the fifth folding area 125 and an area adjacent to the top sealing portion 120b, and the second folding portion F2 may be folded under the first folding portion F1. The third folding portion F3 may be placed below the first folding portion F1 and the second folding portion F2 and may be a portion of the top sealing portion 120b. Thus, in this example, the folding portion F is formed by stacking three layers.

The corner sealing portion 120c may be folded to be adjacent to the upper surface of the case. The folding areas may include the first folding area 121 along which the side sealing portion 120a is folded in the third direction D3, the second folding area 122 extending from the first folding area 121, and the third folding area 123 along which the top sealing portion 120b is folded in the first direction D1. The folding areas may further include the fourth folding area 124 along which the corner sealing portion 120c is folded in a second direction D2 and a direction opposite to the second direction D2 and the fifth folding area 125 along which folding is made within the corner sealing portion 120c when the corner sealing portion 120c is folded along the second folding area 122.

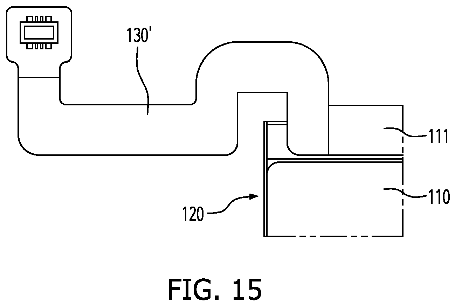

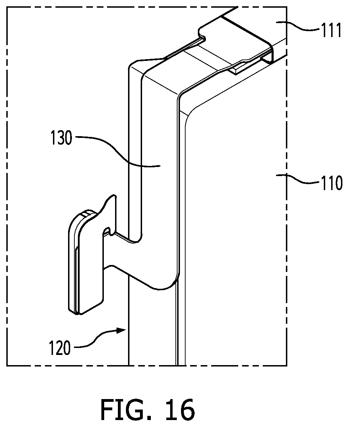

FIG. 15 shows how a conventional FPCB 130 extend relative to a secondary battery, and FIG. 16 shows how the FPCB 130 extends relative to a secondary battery according to one embodiment of the present disclosure. Referring to FIG. 15, the path along which the FPCB 130 extends bypasses the sealing portion, which thereby increases the overall length or width of a battery pack including the secondary battery. As the length or width increases, the capacity of the battery pack may increase by, for example, around nine percent or more depending on the design. Such a configuration may result in decreased energy density. But when the sealing portion is folded to allow the FPCB 130 to extend from the lead tab 111 and along the case as illustrated in FIG. 16, the space occupied by the path along which the FPCB 130 extends is reduced compared to the conventional example, thereby improving the energy density.

## Claims

1. A secondary battery (100) comprising:
an electrode assembly (20); and
a case comprising:
a body portion (110) accommodating the electrode assembly (20) therein,
a cover (120) covering an opening the body portion (110),
wherein a sealing portion is formed where outer surfaces of the body portion 110 and the cover (120) contact each other to thereby seal the electrode assembly (20) in the case, with the sealing portion including:
a top sealing portion (120b) extending in a first direction (D1) from an upper surface of the case;
side sealing portions (120a) each of which extends from a side surface of the case in (i) a second direction (D2) that intersects the first direction (D1) or (ii) a direction opposite to the second direction (D2), and
a corner sealing portion (120c) folded in the first direction (D1) when the top sealing portion (120b) and the side sealing portions (120a) are folded in a third direction (D3) intersecting the first direction (D1) and the second direction (D2).

2. The secondary battery (100) as claimed in claim 1, wherein the corner sealing portion (120c) is folded in the direction opposite to the second direction (D2).

3. The secondary battery (100) as claimed in claim 1 or 2, wherein the corner sealing portion (120c) is on the top sealing portion (120b).

4. The secondary battery (100) as claimed in claim 2 or 3, wherein the top sealing portion (120b) and the plurality of side sealing portions (120a) are folded along folding areas in the third direction (D3), and
wherein the folding areas comprise a first folding area (121) along which the side sealing portions (120a) are folded in the third direction (D3), a second folding area (122) extending from the first folding area (121), and a third folding area (123) along that the top sealing portion (120b) is folded in the third direction (D3).

5. The secondary battery (100) as claimed in claim 4, wherein the corner sealing portion (120c) comprises corner sealing portions (120c), and the folding areas include:
a fourth folding area (124) along which the corner sealing portions (120c) are folded in the second direction (D2) or the direction opposite to the second direction (D2) after having been folded in the third direction (D3) along the second folding area (122); and
a fifth folding area (125) along which folding is made within the corner sealing portion (120c) when each of corner sealing portions (120c) is folded along the fourth folding area (124).

6. The secondary battery (100) as claimed in claim 5, wherein the fourth folding area (124) is positioned above the third folding area (123) in the first direction (D1).

7. The secondary battery (100) as claimed in claim 6, wherein the fifth folding area (125) extends from the top of the sealing portion to the second folding area (122).

8. The secondary battery (100) as claimed in claim 6 or 7, wherein each of the corner sealing portions (120c) is folded in the first direction (D1) by being folded along the fourth folding area (124) and the fifth folding area (125).

9. The secondary battery (100) as claimed in any one of the preceding claims, wherein a first lead tab (111-1) connected to a plurality of first electrode tabs (11-1) of the electrode assembly (20) and a second lead tab (111-2) connected to a plurality of second electrode tabs (12-1) of the electrode assembly (20) extend in the first direction (D1), and
wherein, when the top sealing portion (120b) is folded in the third direction (D3), each of the first lead tab (111-1) and the second lead tab (111-2) is also folded in the third direction (D3) and then folded in a direction opposite to the third direction (D3).

10. The secondary battery (100) as claimed in claim 9, wherein the first lead tab (111-1) and the second lead tab (111-2) are electrically connected to a flexible printed circuit board, FPCB, (130), and the FPCB (130) extends in the second direction (D2).

11. A device (200) for manufacturing a secondary battery (100), the method comprising
a guide block that fixes a case comprising a body portion (110) accommodating an electrode assembly (20), a cover (120) covering an opening of the body portion (110) to seal the electrode assembly (20), and a sealing portion where outer surfaces of the body portion (110) and the cover (120) contact each other to seal the electrode assembly (20) in the case;
a push block that applies pressure to the case on a side that is opposite to the guide block; and
a roller that rotates on a top sealing portion (120b) located on an upper surface of the case and folds the top sealing portion (120b).

12. The device (200) as claimed in claim 11, wherein the guide block comprises:
a first guide block (201) supporting at least a portion of a lower surface of the case in a first direction (D1); and
a second guide block (203) supporting at least a portion of a side surface of the case in a direction opposite to a second direction (D2), and
wherein the push block comprises:
a first push block (202) pressing an upper portion of the case in a direction opposite to the first direction (D1) on a side that is opposite to the first guide block (201) to bend the top sealing portion (120b); and
a second push block (204) pressing a side portion of the case in the second direction (D2) on a side that is opposite to the second guide block (203) to fold each of side sealing portions (120a) on their respective side surfaces of the case.

13. The device (200) as claimed in claim 12, wherein a width of the first push block (202) in the second direction (D2) is less than a width of the top sealing portion (120b) in the second direction (D2).

14. The device (200) as claimed in claim 12 or 13, wherein the roller comprises a first roller (211) and a second roller (212) that rotate from opposite ends of the top sealing portion (120b) to a central area of the top sealing portion (120b) so as to fold the top sealing portion (120b).

15. A method of manufacturing a secondary battery (100) comprising an electrode assembly (20) and a case comprising a body portion (110) accommodating the electrode assembly (20), a cover (120) covering an opening of the body portion (110), with a sealing portion formed where outer surfaces of the body portion (110) and the cover (120) contact each other to thereby seal the electrode assembly (20) in the case, the method comprising:
folding, toward the case, each of side sealing portions (120a) of the sealing portion, each of the side sealing portions (120a) extending from a side surface, the folding being in a third direction (D3) that intersects a second direction (D2);
applying pressure to a top sealing portion (120b) of the sealing portion in a direction opposite to the first direction (D1), the top sealing extending from an upper surface of the case in a first direction (D1) intersecting the second direction (D2) and the third direction (D3); and
folding the top sealing portion (120b) in the third direction (D3) by a rotational movement a plurality of rollers to fold corner sealing portions (120c) of the sealing portion in the second direction (D2) and a direction opposite to the second direction (D2).
